# EUROPÄISCHE PATENTSCHRIFT

(11) **EP 0 471 172 B1**
(45) Veröffentlichungstag und Bekanntmachung des Hinweises auf die Patenterteilung: **23.02.1994**
(21) Anmeldenummer: 91110815.7
(22) Anmeldetag: 29.06.1991
(51) Int. Cl.: E05C 17/32

(54) **Sicherungsschere**
Security linkage
Arrêt de sécurité à genoullère

(30) Priorität: 08.07.1990 DE 4021778
(43) Veröffentlichungstag der Anmeldung: 19.02.1992
(73) Patentinhaber: GEZE GmbH & Co., D-71226 Leonberg (DE)
(72) Erfinder: Singer, Lothar, W-7016 Gerlingen (DE)

(56) Entgegenhaltungen:
- DE-A- 2 812 894
- DE-B- 1 265 617
- DE-U- 1 922 798
- FR-A- 832 942
- FR-A- 2 485 610
- FR-A- 2 579 260
- GB-A- 916 123
- US-A- 3 928 889
- US-A- 4 398 317

## Beschreibung

Die Erfindung geht aus von einer Sicherungsschere mit den Merkmalen des Oberbegriffs des Patentanspruchs 1.

Derartige Sicherungsscheren werden vorzugsweise bei Oberlicht-Kippflügeln eingesetzt, in der Regel zusätzlich zu einer über Handhebel oder motorisch gesteuerten Öffnerschere. Sie dienen zur Sicherung gegen ein Abstürzen des Flügels für den Fall, daß die Öffnerschere zum Putzen ausgehängt wird oder die Öffnerschere bricht. Eine solche Sicherungsschere ist z. B. in der DE-OS 28 12 894 beschrieben.

Nachteil bei den bekannten Sicherungsscheren ist, daß sie bei schweren Flügeln nicht verwendet werden können. Es treten dann Überlastungen vorzugsweise in den Lager- und Gelenkstellen auf, was zum Bruch oder zu Deformationen der Schere führen kann. Bei stärkerer Dimensionierung der Schere ergibt sich eine unerwünschte Vergrößerung der Baugröße. Insbesondere wenn die Sicherungsschere im Falz eingesetzt wird, ist die Baugröße limitiert.

Der Erfindung liegt die Aufgabe zugrunde, eine Sicherungsschere der eingangs genannten Art zu entwickeln, die bei kompakter kleiner Bauweise auch bei schweren Flügeln eingesetzt werden kann.

Diese Aufgabe wird durch die Erfindung gelöst, indem vorgesehen wird, daß die Sicherungsschere einen elastisch verformbaren Lenker aufweist. Damit wird die dynamische Energie bei der Öffnungsbewegung des Fensterflügels über die elastische Verformung des Lenkers aufgenommen und vernichtet, ohne daß eine stärkere Dimensionierung der Schere erforderlich ist. Der Lenker kann formelastisch und/oder materialelastisch sein. Dies bedeutet, daß die Elastizität durch entsprechende Formgebung des Lenkers oder durch Verwendung eines besonders elastischen Materials, z. B. Kunststoffmaterial, erhalten wird. Beim Abstürzen oder unkontrollierten Öffnen des Flügels wird ein Aufprallen in der Öffnungsstellung durch die Verformung des Lenkers verhindert. Vorzugsweise erfolgt die Dämpfung kurz vor Erreichen der Endoffenstellung.

Es sind Ausführungen mit nur einem Lenker und vorzugsweise Ausführungen mit zwei gelenkig miteinander verbundenen Lenkern oder zwei Teleskoplenkern vorgesehen.

Vorzugsweise ist der Lenker im wesentlichen in Lenkerlängsrichtung elastisch verformbar. Damit kann die dynamische Energie in der maximalen Öffnungsstellung des Flügels in der Strecklage der Sicherungsschere besonders gut abgefangen werden.

Bei bevorzugten Ausführungen weist der Lenker mindestens einen in Lenkerquerrichtung gewellten Abschnitt auf. Hierbei kann der Lenker einen wellblechartig geformten Abschnitt aufweisen, mit mehreren nebeneinander in Querrichtung angeordneten Wellen. Die gewellte Ausgestaltung verleiht die gewünschte Elastizität in Lenkerlängsrichtung. Es kann hierfür herkömmliches Flachmaterial aus Metall verwendet werden.

Bei anderen Ausführungen wird die Elastizität dadurch erreicht, daß der Lenker mindestens einen in Querrichtung verlaufenden Schlitz aufweist. Vorzugsweise sind Schlitze an gegenüberliegenden Längskanten des Lenkers angeordnet.

Bei anderen Ausführungen weist der Lenker einen Abschnitt aus elastischem Kunststoffmaterial auf. Vorzugsweise ist der gesamte Lenker aus diesem Material ausgebildet.

Vorteilhafterweise weisen die Lenker in Strecklage miteinander zusammenwirkende Anschläge auf. Diese Anschläge können so angeordnet sein, daß sie den maximalen Streckwinkel kleiner als 180 Grad begrenzen. Dies gewährleistet, daß die Scherenlenker jeweils nur auf eine Seite hin öffnen und schließen und damit keine Fehlfunktion auftritt. Ferner wirken die Anschläge zur besseren Krafteinleitung und Entlastung der Lager- und Gelenkstellen.

Die Erfindung wird nun anhand der in den Figuren dargestellten Ausführungsbeispielen unter Bezugnahme auf die Figuren näher erläutert. Dabei zeigen
- Figur 1: eine schematische Frontansicht eines Fensters mit Kippflügel mit einem Oberlichtöffner und erfindungsgemäßen Falzscheren;
- Figur 2: einen vergrößerten Ausschnitt im seitlichen Falz in Figur 1 mit der Falzschere;
- Figur 3: eine schematische Seitenansicht des Fensters in Figur 1 bei geöffnetem Flügel und ausgehängter Öffnerschere;
- Figur 4: einen vergrößerten Ausschnitt im Bereich IV in Figur 3 bei einem abgewandelten Ausführungsbeispiel;
- Figur 5: einen vergrößerten Ausschnitt entsprechend Figur 4 bei einem weiteren abgewandelten Ausführungsbeispiel;
- Figur 6: eine schematische Seitenansicht eines Lenkers eines weiteren abgewandelten Ausführungsbeispiels;
- Figur 7: eine Seitenansicht einer Falzschere eines anderen abgewandelten Ausführungsbeispiels.

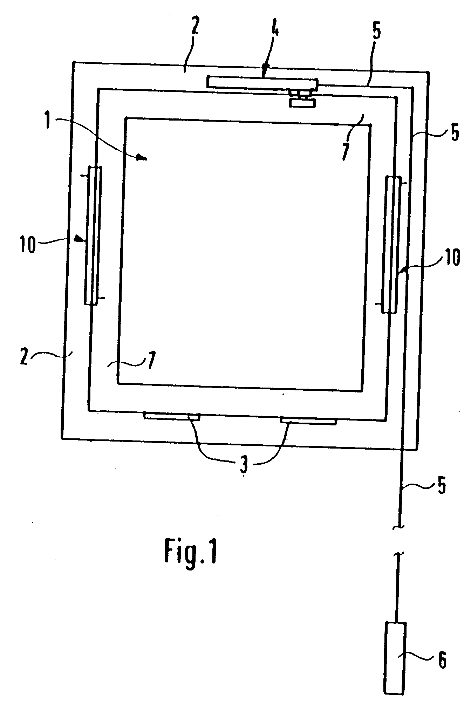

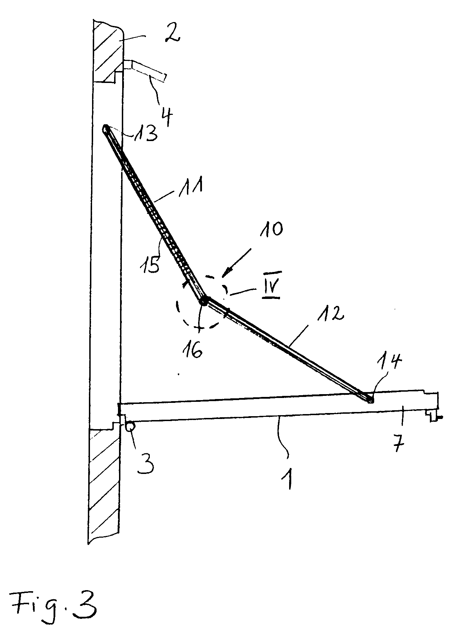

Das in Figur 1 dargestellte Fenster weist einen Kippflügel 1 auf, der an seiner unteren horizontalen Kante in am Blendrahmen 2 befestigten Kippbändern 3 gelagert ist.

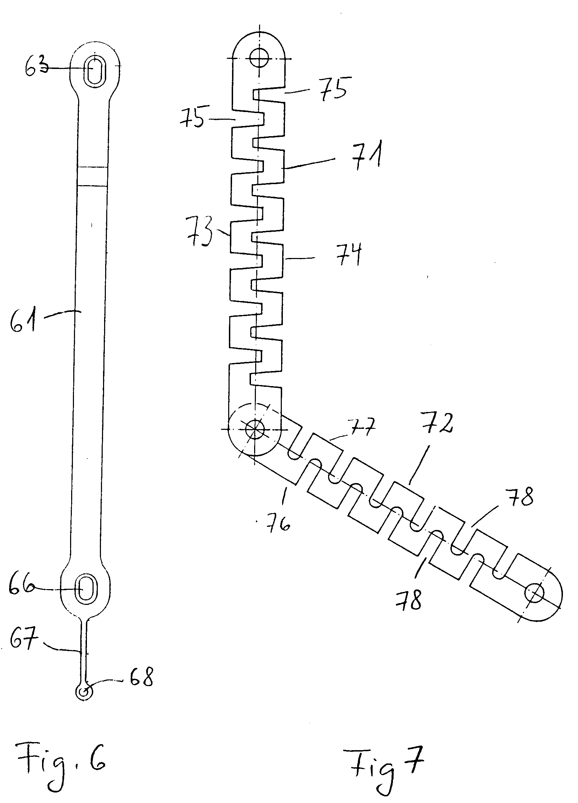

Zur Betätigung des Kippflügels 1 ist ein herkömmlicher Oberlichtöffner mit einer Öffnerschere 4, einem am Blendrahmen geführten Stellgestänge 5 und einem Handhebel 6 vorgesehen. Im Falzraum zwischen den vertikalen Holmen des Blendrahmens 2 bzw. des Flügels 7 ist an einer oder an beiden Seiten des Flügels je eine erfindungsgemäße Falzschere 10 angeordnet. Die Falzscheren 10 bilden sogenannte Sicherheitsscheren. Sie halten den Flügel 1 bei ausgehängter Öffnerschere 4, wie in Figur 3 dargestellt ist.

Die Scheren 10 in Figur 1 weisen jeweils zwei gelenkig miteinander verbundene Lenker 11, 12 auf, die an ihren freien Enden in einem Lager 13 am Blendrahmen 2 bzw. in einem Lager 14 am Flügelrahmen 7 gelenkig gelagert sind. Beide Lenker 11, 12 sind längliche Stäbe aus Flachmaterial. Der Lenker 11 ist in einem Abschnitt 15 zwischen dem Lager 13 und dem Verbindungsgelenk 16 wellblechartig geformt. Der andere Lenker 12 ist ebenfalls flach, aber nicht gewellt ausgebildet.

Die Wellen des Abschnitts 15 am Lenker 11 verlaufen in Lenkerquerrichtung. Dadurch ist der Lenker 11 in Längsrichtung elastisch. Bei dem dargestellten Ausführungsbeispiel besteht der Wellenabschnitt 15 aus zwölf nebeneinander angeordneten Wellen.

Das Verbindungsgelenk 16 ist als Nietverbindung ausgebildet. Ein im Lenker 12 fixierter Gelenkbolzen 17 greift mit seinem freien Ende in ein Langloch 18 im Lenker 11 ein. Das Langloch 18 verläuft in Längsrichtung des Lenkers 11. Damit wird ein Spiel im Verbindungsgelenk 16 erhalten. Es dient zum Ausgleich von Anschlagtoleranzen und zum Ausgleich von elastischen oder plastischen Längenveränderungen des Lenkers 11.

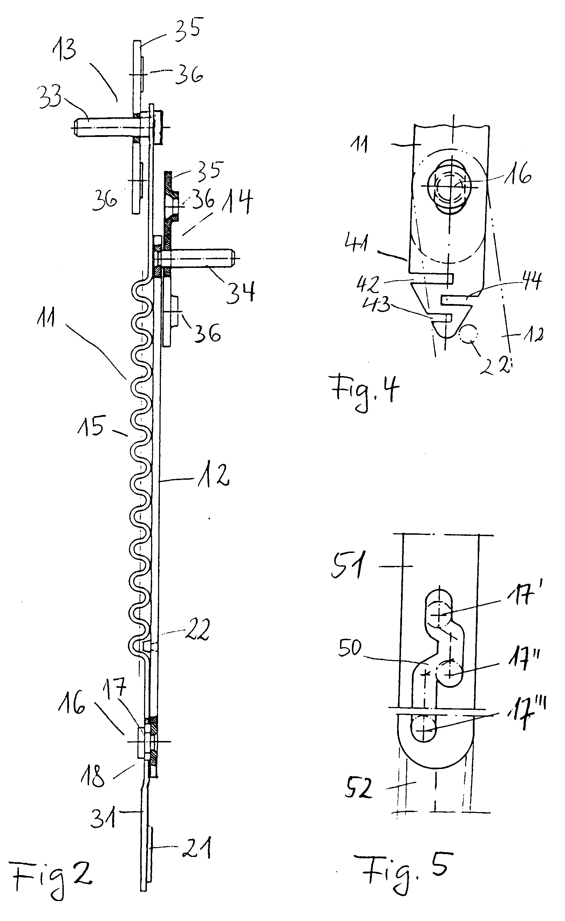

In der in Figur 3 dargestellten Strecklage stehen die Lenker 11, 12 in gegenseitigem Anschlag. Hierfür ist am Lenker 12, nahe dem Verbindungsgelenk 16, eine Anschlagnase 22 ausgeformt, die in der Strecklage in Anschlag mit einer am Lenker 11 ausgebildeten Anschlagnase 21 steht (s.Fig.2). Diese Anschlagnase 21 ist an einem Fortsatz 31 des Lenkers 11 ausgebildet, der sich über das Verbindungsgelenk 16 hinaus erstreckt. Die Anschläge 21, 22 verhindern, daß beim Öffnen des Flügels die Falzschere über den stumpfen Winkel in Figur 3 hinausschert und beim Schließen eine Fehlfunktion auftritt, bei der etwa die Schere in die Gegenrichtung mit nach oben wanderndem Scheitelpunkt schert und damit das Schließen behindert.

Wie in Figur 2 zu erkennen ist, weist das Lager 14 am Flügelrahmen 7 einen Gelenkstift 34 auf, der mit dem Lenker 12 vernietet ist. Der Gelenkstift 34 ist in einer Befestigungslasche 35 fixiert, die mit dem Flügelrahmen 7 über zwei Befestigungsschrauben 36 verschraubt ist. Zusätzlich greift der Gelenkstift 34 mit seinem vom Lenker 12 abgewandten Ende in eine Bohrung im Flügelrahmen 7 ein, so daß eine sichere Verankerung erreicht wird. Das Lager 13 des Lenkers 11 ist in entsprechender Weise im Blendrahmen 2 verankert. Es weist hierfür ebenfalls eine Befestigungslasche 35 mit Schrauben 36 auf. Der im Blendrahmen eingreifende Gelenkstift 33 ist jedoch im Lenker 11 lediglich eingehängt, wobei die Verbindung bajonettartig ausgebildet ist. Der längliche Bajonettkopf 33 a des Gelenkstifts 33 ist in Rahmenlängsrichtung und die komplementäre Einhängeöffnung 33 b im Lenker 11 in Lenkerquerrichtung ausgerichtet. Das Aus- und Einhängen ist daher nur bei rechtwinkelig zum Rahmen 2 ausgerichtetem Lenker 11 möglich.

Die Lenker 11 und 12 sind zur Längsmittellinie jeweils symmetrisch ausgebildet, so daß sie links/rechts einsetzbar sind. Die Symmetrie betrifft die Ausgestaltung der Anschläge 21, 22, der Lager 13, 14 und des Verbindungsgelenks 11.

Die Vorrichtung funktioniert wie folgt:

Zum Öffnen und Schließen des Fensters wird die Öffnerschere 4 über Handhebel 6 und Gestänge 5 betätigt. Die Ausstellweite der Öffnerschere 4 bestimmt dabei den maximalen Öffnungswinkel des Flügels.

Die Falzscheren 10 werden durch die Bewegung des Flügels 1 zwangsweise betätigt. Bei der Öffnungsbewegung werden die Lenker 11 und 12 auseinander- und bei der Schließbewegung zusammengeschert.

Wenn der Flügel 1 in die in Figur 3 dargestellte Offenstellung, z. B. zum Putzen, überführt werden soll, muß zunächst die Verbindung zwischen der Öffnerschere 4 und dem Flügelrahmen 7 gelöst und sodann der Flügel von Hand in die dargestellte Putzstellung geführt werden. In dieser Stellung stehen die Falzscheren 10 in der in Figur 3 gezeigten Streckstellung unter gegenseitigem Anschlag der Anschlagnasen 21, 22.

Wenn das Fenster wieder geschlossen werden soll, muß der Flügel 1 von Hand zurückgeschwenkt werden. Dabei scheren die Lenker 11, 12 wieder zusammen. Schließlich wird die Öffnerschere 4 am Flügelrahmen 7 wieder eingehängt.

Wenn einmal der Lenker 11 aus dem Lager 13 ausgehängt werden soll, muß der Flügel zunächst in die in Figur 3 dargestellte Offenstellung gebracht werden. In dieser Stellung muß sodann der Lenkerfortsatz 31 von Hand so weit angehoben werden, daß die Anschlagnasen 21, 22 außer Anschlag kommen. Die Lenker 11, 12 werden sodann in Gegenrichtung nach oben hin von Hand geschert und der Flügel schließlich so weit angehoben, bis der Lenker 11 rechtwinkelig zum Blendrahmen 2 und der Bajonettkopf 33 a mit der Bajonettöffnung 33 b fluchtet. In dieser Stellung wird sodann der Lenker 11 von Hand vom Gelenkstift 33 abgehoben.

Das Wiedereinhängen des Lenkers 11 bzw. die Montage der Falzschere 10 erfolgt entsprechend in umgekehrter Reihenfolge. Hierbei ergibt sich aufgrund der symmetrischen Ausgestaltung der Anschläge 21, 22 zunächst eine Strecklage mit nach unten gewandtem stumpfen Winkel. Durch Anheben des Lenkerfortsatzes 31 werden die Anschlagnasen 21, 22 außer Eingriff gebracht und die Schere sodann von Hand in die in Figur 3 gezeigte Betriebsstreckstellung überführt.

Bei der in Figur 4 dargestellten Variante ist der Fortsatz 41 des Lenkers 11 in Axialrichtung elastisch ausgebildet, indem an dem spitzwinkelig zulaufenden Ende Querschlitze 42, 43, 44 ausgeformt sind, wobei an der linken Flanke die Schlitze 42, 43 und an der rechten Flanke der Schlitz 44 jeweils zueinander versetzt angeordnet sind. In der dargestellten Strecklage steht die rechte Flanke als Anschlagkante mit der am Lenker 12 angeformten stiftförmigen Anschlagnase 45 in Anschlag. Die Anschlagnase 45 und die Anschlagkante am Lenkerfortsatz 41 sind in entsprechender Position wie beim vorangehenden Ausführungsbeispiel in der Nähe des Verbindungsgelenks 16 angeordnet.

In der in Figur 3 entsprechenden Öffnungsstellung kann bei Verwendung der Schere mit der Anschlageinrichtung in Figur 4 der Winkel zwischen den Lenkern 11, 12 bis auf 180 Grad gestreckt sein, vorzugsweise wenn ein sehr schwerer Flügel eingesetzt wird und insbesondere in dem Moment, wenn der Flügel nach dem Aushängen der Öffnerschere 4 in die Offenlage fällt. Bei der 180-Grad-Streckung wird der Lenkerfortsatz 41 im Anschlag mit dem Anschlagstift 45 elastisch axial gestaucht. Aufgrund der schrägen Anschlagkante am Lenkerfortsatz 41 kann dabei die 180-Grad-Streckung nicht überfahren werden. Die elastische Federwirkung des Lenkerfortsatzes 41 stellt sicher, daß beim Schließen des Flügels die Lenker wieder ordnungsgemäß zusammenscheren. Zum Aus- und Einhängen des Lenkers 11 am Rahmenlager 13 kann der Lenkerfortsatz 41 in entsprechender Weise wie beim vorangehenden Ausführungsbeispiel durch Anheben von Hand oder mittels Werkzeug aus der Anschlaglage gebracht und die Schere in Gegenrichtung bewegt werden.

Der in Figur 6 dargestellte Lenker 61 ist ein Bestandteil eines abgewandelten Ausführungsbeispiels. Er besteht aus elastischem Kunststoffmaterial und ersetzt den gewellten Lenker 11 in Figur 2. Im übrigen ist die Falzschere in gleicher Weise mit den gleichen Bestandteilen wie in Figur 2 aufgebaut.

Der Lenker 61 ist stabförmig ausgebildet. Er weist an seinen beiden Enden jeweils ein Gelenkauge 63, 66 mit Langloch auf, zum Einhängen des Lagerbolzens 33 bzw. des Gelenkbolzens 17. Am Gelenkauge 66 ist ein länglicher Fortsatz 67 angeformt. Der Fortsatz 67 trägt an seinem freien Ende einen Anschlagnocken 68, der in der Strecklage der Falzschere in entsprechender Weise wie bei den vorangehenden Ausführungsbeispielen mit dem anderen Lenker, vorzugsweise mit der Anschlagnase 22 des Lenkers 12, zusammenwirkt.

Bei dem abgewandelten Ausführungsbeispiel in Figur 7 sind beide Lenker 71, 72 elastisch. Sie bestehen jeweils aus ebenem Flachmaterial und weisen jeweils beidseitig an ihren Längskanten 73, 74 bzw. 77, 76 Querschlitze 75 bzw. 78 auf, die zueinander in der Lenkerlängsrichtung versetzt sind. Die Lenker erhalten dadurch ungefähr mäanderbandähnliche Ausformung. Bei dem dargestellten Ausführungsbeispiel sind die Querschlitze 75 im Lenker 11 nach außen hin konisch erweitert. Dadurch wird seine Elastizität erhöht. Bei abgewandelten Ausführungen können die Lenker 71, 72 auch identisch ausgebildet sein. Anschläge 21, 22 für die Strecklage sind in Figur 6 nicht gezeigt, sie können jedoch in gleicher Weise wie bei den vorangehenden Ausführungsbeispielen vorgesehen werden.

Bei weiteren abgewandelten Ausführungsbeispielen können vorzugsweise im Bereich des Verbindungsgelenks 16 an den Lenkern zusätzliche Anschläge angeordnet sein, die die Öffnung der Falzschere nach dem Aushängen der Öffnerschere in einer Zwischenstellung vor Erreichen der Streckstellung begrenzen. Hierfür kann an einem der Lenker im Bereich des Verbindungsgelenks 16 ein Anschlaghebel oder eine Sperrklinke angebracht sein. Der Hebel bzw. die Sperrklinke kann z. B. am Lenkerfortsatz 31 angelenkt sein und mit dem anderen Lenker zusammenwirken. Bei anderen Abwandlungen kann der Hebel oder die Sperrklinke auch am Lenker 12 angeordnet sein und mit dem Lenkerfortsatz 31 zusammenwirken.

Beim Ausführungsbeispiel in Figur 5 stehen die Lenker 51, 52 in der Zwischenstellung in Strecklage. Der Halt in der Zwischenstellung wird dadurch erreicht, daß der im Langloch 50 geführte Gelenkbolzen 17 beim Öffnen des Flügels in einer Rastposition 17'' selbsttätig einrastet. Das Langloch weist hierfür einen zickzackartigen Verlauf auf und ist vorzugsweise relativ lang.

Bei geschlossenem Flügel steht der Gelenkbolzen in der oberen Position 17', bei Zwischenstellung steht er in der Rastposition 17'', bei vollständig geöffnetem Flügel, entsprechend Figur 3, in der Endposition 17'''. Um die Schere aus der Zwischenstellung in die Offenstellung zu überführen, müssen die Lenker 51, 52 beim Öffnen von Hand so geführt werden, daß der Gelenkbolzen aus der Rastposition 17'' freikommt.

## Patentansprüche

1. Sicherungsschere, vorzugsweise Falzschere, für eine um eine horizontale Achse schwenkbaren Flügel eines Fensters oder dergleichen, vorzugsweise Kippflügel (1), die einerseits am Flügel (1) und andererseits am Blendrahmen (2) gelenkig gelagert ist, wobei der Flügel (1) eine Öffnerschere (4) aufweist und die Sicherungsschere (10) als Sicherung gegen ein Abstürzen des Flügels (1) dient, für den Fall, daß die Öffnerschere (4) ausgehängt wird oder bricht, dadurch **gekennzeichnet**,
daß die Sicherungsschere (10) mindestens einen elastisch verformbaren Lenker (11, 61, 71, 72) aufweist.

2. Sicherungsschere nach Anspruch 1, dadurch **gekennzeichnet,** daß der Lenker (11, 61, 71, 72) im wesentlichen in Lenkerlängsrichtung elastisch verformbar ist.

3. Sicherungsschere nach Anspruch 1 oder 2, dadurch **gekennzeichnet,** daß der Lenker (11) mindestens einen in Lenkerquerrichtung gewellten Abschnitt (15) aufweist.

4. Sicherungsschere nach Anspruch 3, dadurch **gekennzeichnet,** daß der Lenker (12) einen wellblechartig geformten Abschnitt (15) aufweist, der aus mehreren nebeneinander angeordneten Wellen besteht.

5. Sicherungsschere nach einem der vorangehenden Ansprüche, dadurch **gekennzeichnet,** daß der Lenker (71, 72) mindestens einen in Lenkerquerrichtung verlaufenden Schlitz (75, 78) aufweist.

6. Sicherungsschere nach Anspruch 5, dadurch **gekennzeichnet,** daß Schlitze (75, 78) an gegenüberliegenden Längskanten (73, 74, 77, 78) des Lenkers (71, 72) angeordnet sind.

7. Sicherungsschere nach Anspruch 6, dadurch **gekennzeichnet,** daß die Schlitze (75, 78) an den gegenüberliegenden Längskanten (73, 74, 77, 78) in der Lenkerlängsrichtung versetzt angeordnet sind.

8. Sicherungsschere nach einem der Ansprüche 5 bis 7, dadurch **gekennzeichnet,** daß sich die Schlitze (75, 78) über die Mittellängsachse des Lenkers (71, 72) erstrecken.

9. Sicherungsschere nach einem der vorangehenden Ansprüche, vorzugsweise nach einem der Ansprüche 5 bis 8, dadurch **gekennzeichnet,** daß der Lenker (71, 72) mäanderbandartig ausgebildet ist.

10. Sicherungsschere nach einem der vorangehenden Ansprüche, dadurch **gekennzeichnet,** daß der Lenker (61) einen Abschnitt aus elastischem Kunststoffmaterial aufweist.

11. Sicherungsschere nach einem der vorangehenden Ansprüche mit mindestens zwei miteinander verbundenen Lenkern, dadurch **gekennzeichnet,** daß die Lenker (11, 12, 61) in Strecklage und/oder in einer Zwischenstellung miteinander zusammenwirkende Anschläge (21, 22, 31, 41, 68) aufweisen.

12. Sicherungsschere nach Anspruch 11, dadurch **gekennzeichnet,** daß die Anschläge (21, 22, 31, 41, 68) im Bereich eines Verbindungsgelenks (16) der Lenker (11, 12, 61) angeordnet sind.

13. Sicherungsschere nach Anspruch 11 oder 12, dadurch **gekennzeichnet,** daß ein Anschlag (21, 31, 41, 68) an einem sich über ein Verbindungsgelenk (16) der Lenker (11, 12, 61) hinaus erstreckenden Lenkerfortsatz (31, 41, 67) ausgebildet ist.

14. Sicherungsschere nach einem der Ansprüche 11 bis 13, dadurch **gekennzeichnet,** daß der mit einem Anschlag (21, 22, 31, 41, 68) verbundene Lenkerabschnitt (11, 12, 51, 31, 41, 67), insbesondere der Lenkerfortsatz (31, 67), von Hand oder mittels eines Werkzeugs elastisch so weit verformbar ist, daß die Anschläge (21, 22, 68) außer Anschlag gelangen.

15. Sicherungsschere nach Anspruch 13 oder 14, dadurch **gekennzeichnet,** daß der Lenkerfortsatz (41) in Lenkerlängsrichtung, z. B. über Querschlitze (42, 43, 44), elastisch verformbar ist und vorzugsweise eine spitzwinkelig zur Lenkerlängsachse verlaufende schräge Anschlagkante aufweist.

## Claims

1. Security linkage, preferably a rebate scissor, for a window casement or the like rotatable round a horizontal axis, preferably a bottom-hung casement (1), which is mounted with a hinged bearing on the one side on the casement (1) and on the other side on the blind frame (2), whereby the casement (1) has an opener scissor (4) and the security linkage (10) acts as a securing element to stop the casement falling out if the opener scissor (4) is detached or snaps, **characterised** in that
the security linkage (10) has at least one elastically deformable guide linkage (11, 61, 71, 72).

2. Security linkage as set forth in claim 1,
**characterised** in that the guide linkage (11, 61, 71, 72) is basically elastically deformable in the longitudinal direction of the guide linkage.

3. Security linkage as set forth in claim 1 or 2,
**characterised** in that the guide linkage (11) has at least one section corrugated transverse to the direction of the guide linkage (15).

4. Security linkage as set forth in claim 3,
**characterised** in that the guide linkage (12) has a corrugated-metal type section (15), consisting of several corrugations arranged adjacent to each other.

5. Security linkage as set forth in the preceding claims,
**characterised** in that the guide linkage (71, 72) has at least one slit (75, 78) running transverse to the direction of the guide linkage.

6. Security linkage as set forth in claim 5,
**characterised** in that slits (75, 78) are arranged at opposing longitudinal edges (73, 74, 77, 78) of the guide linkage (71, 72).

7. Security linkage as set forth in claim 6,
**characterised** in that the slits (75, 78) at the opposing longitudinal edges (73, 74, 77, 78) are arranged offset in the longitudinal direction of the guide linkage.

8. Security linkage as set forth in claims 5 to 7,
**characterised** in that the slits (75, 78) extend along the centre longitudinal axis of the guide linkage (71, 72).

9. Security linkage as set forth in one of the preceding claims, preferably as set forth in one of the claims 5 to 8,
**characterised** in that the guide linkage (71, 72) is laid out in meander design.

10. Security linkage as set forth in one of the preceding claims, **characterised** in that the guide linkage (61) has a section made of elastic plastic material.

11. Security linkage as set forth in one of the preceding claims with at least two guide linkages connected together,
**characterised** in that, when stretched out and/or at an intermediate position, the guide linkages (11, 12, 61) have stops (21, 22, 31, 41, 68) which cooperate with each other.

12. Security linkage as set forth in claim 11,
**characterised** in that the stops (21, 22, 31, 41, 68) are arranged in the area of a connecting link (16) of the guide linkages (11, 12, 61).

13. Security linkage as set forth in claim 11 or 12,
**characterised** in that a stop (21, 31, 41, 68) is positioned on a guide linkage extension (31, 41, 67) extending beyond a connecting link (16) of the guide linkages (11, 12, 61).

14. Security linkage as set forth in one of the claims 11 to 13, **characterised** in that the guide linkage section (11, 12, 51, 31, 41, 67), in particular the guide linkage extension (31, 67), connected with a stop (21, 22, 31, 41, 68) can be
deformed by hand or using a tool, such that the stops (21, 22, 68) no longer act as stops.

15. Security linkage as set forth in claim 13 or 14,
**characterised** in that the guide linkage extension (41) is elastically deformable in the longitudinal direction of the guide linkage, e.g. via cross-slits (42, 43, 44), and preferably has a slanted stopping edge running at an acute angle to the longitudinal axis of the guide linkage.

## Revendications

1. Genouillère de sécurité, de préférence genouillère de feuillure, pour un vantail d'une fenêtre ou analogue tournant autour d'un axe horizontal, de préférence pour un vantail basculant (1), qui est monté de façon articulée sur le vantail (1) par un côté et sur le bâti dormant (2) par l'autre côté, le vantail (1) présentant une genouillère d'ouverture (4) et la genouillère de sécurité (10) servant de protection contre la chute du vantail (1) au cas où la genouillère d'ouverture (4) est décrochée ou se casse, caractérisée en ce que la genouillère de sécurité (10) comporte au moins un bras (11, 61, 71, 72) élastiquement déformable.

2. Genouillère de sécurité selon la revendication 1, caractérisée en ce que le bras (11, 61, 71, 72) est essentiellement déformable élastiquement dans la direction longitudinale du bras.

3. Genouillère de sécurité selon la revendication 1 ou 2, caractérisée en ce que le bras (11) comporte au moins un segment (15) ondulé dans la direction transversale du bras.

4. Genouillère de sécurité selon la revendication 3, caractérisée en ce que le bras (12) comporte un segment (15) conformé à la façon d'une tôle ondulée et constitué de plusieurs ondes juxtaposées.

5. Genouillère de sécurité selon une des revendications précédentes, caractérisée en ce que le bras (71, 72) présente au moins une fente (75, 78) orientée dans le sens transversal du bras.

6. Genouillère de sécurité selon la revendication 5, caractérisée en ce que des fentes (75, 78) sont disposées sur les bords longitudinaux opposés (73, 74, 77, 78) du bras (71, 72).

7. Genouillère de sécurité selon la revendication 6, caractérisée en ce que les fentes (75, 78) sur les bords longitudinaux opposés (73, 74, 77, 78) sont mutuellement décalées dans le sens de la longueur du bras.

8. Genouillère de sécurité selon une des revendications 5 à 7, caractérisée en ce que les fentes (75, 78) s'étendent au-delà de l'axe longitudinal médian du bras (71, 72).

9. Genouillère de sécurité selon une des revendications précédentes, de préférence selon une des revendications 5 à 8, caractérisée en ce que le bras (71, 72) est réalisé en forme de grecques.

10. Genouillère de sécurité selon une des revendications précédentes, caractérisée en ce que le bras (61) comporte un segment en matériau plastique élastique.

11. Genouillère de sécurité selon une des revendications précédentes et comportant au moins deux bras reliés l'un à l'autre, caractérisée en ce que les bras (11, 12, 61) présentent des butées (21, 22, 31, 41, 68) qui coopèrent entre elles à l'état étendu et/ou à une position intermédiaire.

12. Genouillère de sécurité selon la revendication 11, caractérisée en ce que les butées (21, 22, 31, 41, 68) sont disposées dans la région d'une articulation de liaison (16) des bras (11, 12, 61).

13. Genouillère de sécurité selon la revendication 11 ou 12, caractérisée en ce qu'une butée (21, 31, 41, 68) est formée sur un prolongement de bras (31, 41, 67) s'étendant au-delà d'une articulation de liaison (16) des bras (11, 12, 61).

14. Genouillère de sécurité selon une des revendications 11 à 13, caractérisée en ce que le segment de bras (11, 12, 51, 31, 41, 67) relié à une butée (21, 22, 31, 41, 68), en particulier le prolongement de bras (31, 67), est déformable élastiquement, manuellement ou au moyen d'un outil, au point que les butées (21, 22, 68) ne s'appliquent plus l'une contre l'autre.

15. Genouillère de sécurité selon la revendication 13 ou 14, caractérisée en ce que le prolongement de bras (41) est déformable élastiquement dans le sens de la longueur du bras, par exemple grâce à la prévision de fentes transversales (42, 43, 44), et présente un bord d'arrêt oblique, s'étendant de préférence sous un angle aigu par rapport à l'axe longitudinal du bras.
